Europäisches Patentamt

European Patent Office

Office européen des brevets

(19)

(11) Veröffentlichungsnummer : **0 328 526 B1**

# (12) EUROPÄISCHE PATENTSCHRIFT

(45) Veröffentlichungstag der Patentschrift :
**11.12.91 Patentblatt 91/50**

(51) Int. Cl.⁵ : **B60T 1/06**

(21) Anmeldenummer : **87906416.0**

(22) Anmeldetag : **29.09.87**

(86) Internationale Anmeldenummer :
**PCT/EP87/00556**

(87) Internationale Veröffentlichungsnummer :
**WO 88/02324 07.04.88 Gazette 88/08**

(54) **FAHRZEUGGETRIEBE MIT INTEGRIERTER BREMSE.**

(30) Priorität : **30.09.86 PCT/EP86/00562**

(43) Veröffentlichungstag der Anmeldung :
**23.08.89 Patentblatt 89/34**

(45) Bekanntmachung des Hinweises auf die
Patenterteilung :
**11.12.91 Patentblatt 91/50**

(84) Benannte Vertragsstaaten :
**DE FR GB IT**

(56) Entgegenhaltungen :
**WO-A-80/02821**
**DE-A- 3 013 431**
**DE-A- 3 248 250**
**FR-A- 2 514 091**
**FR-A- 2 535 255**
**GB-A- 2 109 880**

(73) Patentinhaber : **ZAHNRADFABRIK**
**FRIEDRICHSHAFEN AKTIENGESELLSCHAFT**
**Löwentaler Strasse 100 Postfach 2520**
**W-7990 Friedrichshafen 1 (DE)**

(72) Erfinder : **HUFF, Martin**
**Vogelherdbogen 81**
**W-7992 Tettnang (DE)**

(74) Vertreter : **Raue, Reimund**
**Zahnradfabrik Friedrichshafen AG Löwentaler**
**Strasse 100 Postfach 2520**
**W-7990 Friedrichshafen 1 (DE)**

## Beschreibung

Die Erfindung betrifft Fahrzeuggetriebe mit integrierter Betriebs- und Feststellbremse nach dem Oberbegriff des Anspruches 1.

-A- Solche Fahrzeuggetriebe sind beispielsweise aus der FR 25 35 255 bekannt. Die Betriebs- und Feststellbremse ist axial zwischen einem Planetenrädersatz und einem Hohlradträger angeordnet, wobei ihre Innenscheiben mittels eines radförmig vergrößerten Bremsscheibenträgers von der Sonnenwelle mitgenommen werden, während ihre Außenscheiben in einem Hohlrad geführt sind, das mit dem Planetenrädersatz kämmt. Die Bremsscheiben können über eine Druckscheibe an der Seite des Hohlradträgers entweder von einem Betriebsbrems-Ringkolben oder über diesen und einen Bremslüft-Ringkolben von einer Druckfeder belastet werden. zu dem Betriebsbrems-Ringkolben und dem Bremslüft-Ringkolben gehören ein entsprechender, die axial versetzt zueinander innerhalb einer Radlagerung liegen, Betriebsbrems-Ringzylinder und Bremslüft-Ringzylinder.

Wegen der geringen Durchmesser des Betriebsbrems-Ringkolbens und des Bremslüft-Ringkolbens sind die wirksamen Druckflächen in dem Betriebsbrems-Ringzylinder bzw. dem Bremslüft-Ringzylinder klein, so daß für hohe Bremsbetätigungskräfte entsprechend hohe Betätigungsdrücke bzw. große Druckfedern verwendet werden müssen. Ferner liegen der Betriebsbrems-Ringkolben und der Bremslüft-Ringkolben ungünstig zu den Bremsscheiben, die wegen der günstigeren Bremswirkung auf möglichst großen Durchmesser angeordnet sein sollten. Zur Überbrückung der Durchmesserdifferenz ist daher die genannte Druckscheibe erforderlich, die die Gestaltung des Hohlradträgers und seine Montage beeinträchtigt.

Der Erfindung liegt die Aufgabe zugrunde, bei einem Fahrzeuggetriebe nach dem Oberbegriff von Anspruch 1, die Betätigung der Betriebs- und Feststellbremse axial kurz und für hohe Bremskräfte zu gestalten. Dabei sollen die Betätigungselemente leicht herstellbar und montierbar sein.

Diese Aufgabe wird erfindungsgemäß mit den Merkmalen des Kennzeichens des Anspruches 1 gelöst, insbesondere dadurch, daß der Betriebsbremskolben als Stufenkolben mit vergrößertem Durchmesser in einen Außenringbund des Hohlradträgers mit direkter Druckrichtung in die Bremsscheiben mit eingesetzt wird, und sowohl ein Bremslüft-Ringkolben als auch die Druckfedern innerhalb der axialen Erstreckung des Betriebsbrems-Ringkolbens zu liegen kommen. Dabei ist der Bremslüftkolben ebenfalls als Stufenkolben gestaltet und bildet mit einem ebenfalls am inneren Nabenbund zentrierten Zwischenring einen über Druckleitungen im Hohlradträger betätigbaren Bremslüft-Ringzylinder.

Dabei braucht für die Feststellbremse weder eine axiale Vergrößerung des Bremsenbauraumes noch wegen der Druckfeder und des Bremslüft-Ringzylinders eine radiale Erweiterung des Nabenträgers und des Radlagers vorgenommen werden. Dennoch lassen sich Druckfeder und Bremslüft-Ringkolben in axialer Überdeckung durch den Betriebsbrems-Ringkolben und mit größerem Durchmesser als innerhalb des Nabenträgers anordnen. Dadurch kann mit niedrigeren Arbeitsdrücken gearbeitet werden bzw. ein höherer spezifischer Bremsdruck erreicht werden.

Bei Ausfall der Druckmittelquelle wird die Bremsdruckplatte gegen die Bremsscheiben durch die Druckfeder-Anordnung gepreßt, welche die Kraft der die Bremse während der Fahrt offen haltenden Rückholfedern sicher zu überwinden vermag. Sie ist dazu einerseits gegen die Bremsdruckplatte und andererseits an der Überdeckung durch den Betriebsbremskolben besonders raumsparend gegen den Bremslüftkolben abgestützt, welcher bei Aktivierung des an der Nabe des Hohlradträgers vorgesehenen Bremslüftzylinders über eine eigene Druckmittelleitung die Feststellbremse wieder zu lösen und ständig geöffnet zu halten vermag, bis wieder eine Entspannung der Bremslüftleitung erfolgt. Dabei ist die Anordnung des Bremslüftzylinders und des Druckfederpaketes so getroffen, daß sowohl der Betriebsbremskolben als auch der Hohlradträger in der für die Verwendung der Feststellbremse vorgesehenen Ausführung fakultativ auch ohne dieselbe verwendet werden können und sich die Anpassungsmaßnahmen auf wenige Bohrungen und Überdrehungen beschränken.

Da ein vom Bremslüft-Ringkolben außen umfaßter Zwischenring zwischen die bremsenseitige Stirnseite des Nabenbundes des Hohlradträgers und eine gleichzeitig den Hohlradträger auch auf dem Achsrohr axial festhaltende Schraubbefestigung auf eine als Umfangsdichtfläche ausgeführte Innenfläche des Nabenbundes aufgeschoben und drehfest gehaltert ist, ergibt sich eine besonders fertigungsgünstige und platzsparende Gestaltung des Bremslüft-Ringzylinders.

Weitere vorteilhafte Ausgestaltungen zeigen die Unteransprüche auf:

– Wenn die Innenbremsscheiben durch Verwendung eines radförmigen Bremsscheibenträgers einen relativ großen Innendurchmesser erhalten, bietet sich radial unterhalb des Betriebsbremsen-Ringkolbens eine besonders platzgünstige Möglichkeit zur Unterbringung der Druckfederpakete und kann der Steg des Bremsscheibenträgers entsprechend den axialen Konturen des Bremslüft-Ringzylinders und der Schraubbefestigung axial ausgenommen bzw. versetzt angeordnet sein.

– Mittels eines bei Rotation des Bremsscheibenträgers zur Ausbildung eines gleichbleibenden Ölringes unterhalb der Bremsscheiben ausgestalteten Außenkranzes des Bremsscheibenträgers und darin vorgesehener am Umfang gleichmäßig verteilter radialer Öldurchlaßbohrungen wird trotz beengter Platzverhältnisse eine intensive Bremsscheiben-Kühlung sichergestellt.

– Bei planetenseitig vorkragendem Außenkranz des Bremsscheibenträgers und Axialbohrungen im Steg kann eine zur Schmierung der Planetenlager günstige Ölzirkulation erreicht werden.

– Bei Verwendung von Tellerfedern als Druckfedern und selbstspreizenden Bremsscheiben anstelle anderer Rückstellfedern ergeben sich weitere Platz- und Bauteilersparnisse sowie Montageerleichterungen.

– Durch versetzte Anordnung und der Haupt-Kraftrichtung entsprechende Ausgestaltung von Druckfedern und Rückstellfedern wird ebenfalls Baulänge gespart.

– Mittels als Blattfedern mit radialer Hauptrichtung und einseitiger Festlegung an der Schraubbefestigung des Hohlradträgers ausgeführter Rückstellfedern wird eine besonders kurz bauende und einfach montierbare Bremskolbenanordnung erreicht.

Die erfindungsgemäße Ausführung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Weitere Vorteile der Erfindung sind aus den Zeichnungen ersichtlich.

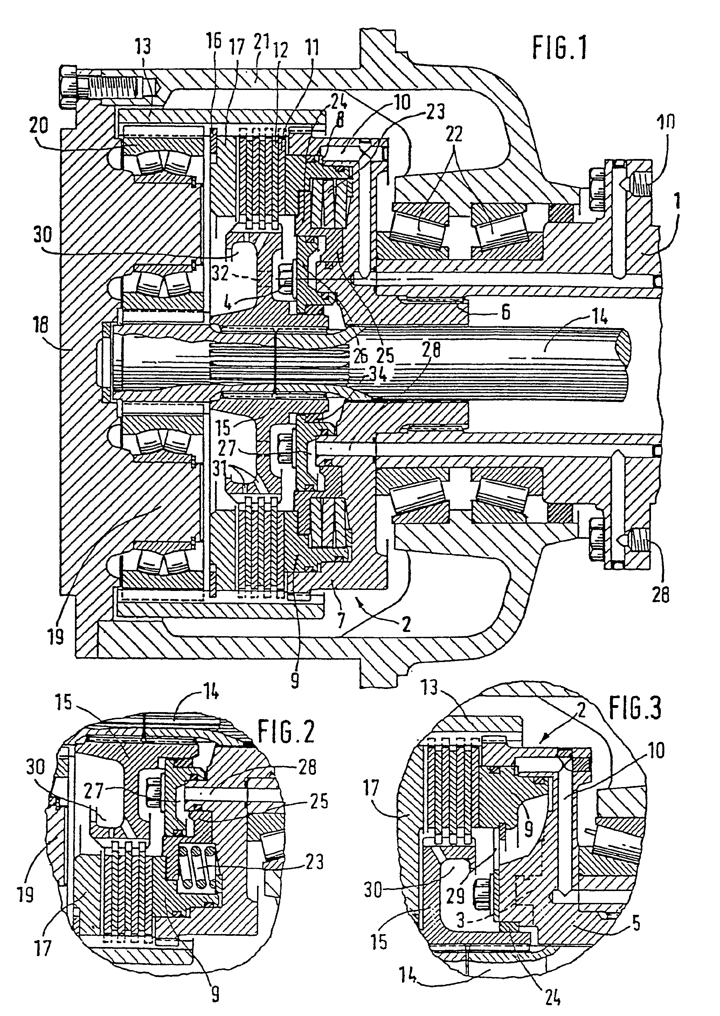

Fig. 1 zeigt ein Anwendungsbeispiel in Kombination mit einem in einer Radnabe untergebrachten Planetengetriebe, bei der ein Bremsscheibenträger vorgesehen ist, unter dessen Kranz sich ein den Planetenbolzen zugewandter Ölfangring befindet und wobei das den Betriebsbremskolben belastende Druckfederpaket aus Tellerfedern besteht, während der Bremslüftzylinder am getriebeseitigen inneren Nabenbund des Hohlradträgers angesetzt ist.

Fig. 2 zeigt eine Abwandlung dieses Beispiels insofern, als der Ölfangring den Planetenbolzen abgewandt ist und das Druckfederpaket aus Schraubenfedern besteht.

Fig. 3 zeigt als Ausschnittdetail gleiche Einbauverhältnisse noch ohne Feststellbremse, jedoch mit einem Hohlradträger-Nabenbund und einem Betriebsbremskolben, in welchen die Führungs- bzw. Dichtflächen für einen Bremslüftzylinder und einen Feststellbremskolben jederzeit noch ohne zusätzliche Platzerfordernisse nachträglich noch angebaut werden kann (siehe gestrichelte Kontur). In diesem Beispiel sind gleichzeitig auch Rückstellfedern für den Betriebsbremskolben als von der hier in die Bildebene hereingeklappten Schraubbefestigung des Hohlradträgers mit festgehaltene Blattfedern dargestellt, deren freies Ende so gegen den Betriebsbremskolben abgestützt ist, daß er bei zusammengepreßter Druckfeder von den Bremsscheiben auf Abstand gehalten ist.

In Fig. 1 ist einem Nabenträger 1 ein Hohlradträger 2 mittels einer in dessen getriebeseitigen inneren Nabenbund 3 eingreifenden Schraubbefestigung 4 druckdicht vorgeflanscht, wobei dessen getriebeabgewandter innerer Nabenbund 5 in eine Innenverzahnung 6 des Nabenträgers 1 zentrierend eingeschoben ist.

Ein weiterer getriebeseitiger, äußerer Nabenbund 7 umgibt einen Betriebsbremszylinder 8, von welchem aus durch eine Druckmittelzufuhr über in den Hohlradträger 2 und den Nabenträger 1 eingelassene Bremsdruckleitungen 10 ein in ihm axial geführter Betriebsbremskolben 9 gegen Bremsscheiben 11, 12 in Anlage bringbar ist. Die äußeren Bremsscheiben 11 sind in einem vom Hohlradträger 2 getragenen Hohlrad 13 und die inneren 12 an einem von einer zentralen Schaftwelle 14 mitgedrehten Bremsscheibenträger 15 achsverschieblich, aber drehfest gehaltert. Bei Aktivierung des Betriebsbrems-Ringkolbens 8 werden die Bremsscheiben 11, 12 gegen eine durch einen Sicherungsring 16 im Hohlrad 13 axial festgehaltene Bremsdruckplatte 17 gepreßt, welche vermeidet, daß es zur Berührung der Stirnseiten der in einem stirnseitigen Gehäusedeckel 18 gehalterten Planetenbolzen 19 und der darauf umlaufenden Planetenräder 20, welche innen von der zentralen Schaftwelle 14 angetrieben werden, kommt. Bremsscheiben 11, 12 und Bremsdruckplatte 17 sind außen gegen die Innenverzahnung des Hohlrades 13 drehfest abgestützt. Der Gehäusedeckel 18 verschließt ein sowohl Hohlradträger 2 und Hohlrad 13 als auch Bremse 8, 9 und Getriebe 14, 19, 20 umschließendes Gehäuse 21.

Bei dem gezeigten Beispiel kann sich das Gehäuse auf einem vom Nabenträger 1 gestützten Lager 22 drehen und ein Fahrzeugrad tragen, welches das Getriebegehäuse 21 außen vollständig überdeckt. Axial zwischen dem Hohlradträger 2 und die ihm zugewandte Rückseite des Betriebsbrems-Ringkolbens 9 ist erfindungsgemäß eine hier als Tellerfederpaket gezeichnete Druckfeder 23 abgestützt. Dabei umfaßt der Betriebsbrems-Ringkolben 9 die Feder 23 am Umfang mit Spiel und bildet zwischen deren bremsenseitiger Stirnseite und der bremsenabgewandten Rückseite des Betriebsbrems-Ringkolbens 9 einen radialen Spalt, in den ein äußerer Radialkragen 24 eines auf einer äußeren zylindrischen Dichtfläche des getriebeseitigen Nabenbundes 3 des Hohlradträgers 2 achsverschieblich geführter Bremslüft-Ringkolben 25 mit geringem Axialspiel hineinragt. Der innerhalb der axialen Überdeckung des Kolbens 9 gelegene Bremslüft-Ringkolben 25 und der von ihm getragene Radialkragen 24 sind im Beispiel etwa um die Federlänge axial versetzt angeordnet und die Feder 23 auf ihrer der Welle 14 zugewandten Innenseite mit einem zylindrischen Bereich zentriert gehalten. Die Innenseite des besagten zylindrischen Bereiches zwischen Kragen 24 und Kolben 25 ist als weitere achsparallele Dichtfläche des Kolbens 25 gegenüber einem ringflanschähnlichen Zwischenring 26 ausgebildet, welcher über die Schraubbefestigung 4 druckdicht gegen die Stirnseite des Nabenbundes 3 des Hohlradträgers 2 angeflanscht ist. Dabei entsteht zwischen dem Zwischenring 26 und dem Kolben 25 ein Bremslüft-Ringzylinder 27, in den separate Bremslüft-Druckleitungen 28 münden, welche koaxial zur Schaftwelle 14 durch Nabenträger 1 und Nabenbund 3 des Hohlradträgers 2 von einer außen liegenden Druckmittelquelle heranführen. Durch Aktivierung des Bremslüft-Ringzylinders 27 wird der Bremslüft-Ringkolben 25 mit dem an ihn anschließenden Radialkragen 24 bis auf Anschlag in Richtung des Hohlradträgers 2 gedrückt, wobei die Feder 23 auf maximaler Vorspannung gehalten ist und dem Betriebsbrems-Ringkolben 9 die Rückstellung, weg von den Bremsscheiben 11 bzw. 12, ermöglicht, wenn keine Bremsung erfolgen soll. Bei Betriebsbremsungen kann der Betriebsbrems-Ringkolben 9 ungehindert von der Stellung des Feststellbrems-Ringkolbens 25 oder der Vorspannung der Feder 23 gegen die Bremsscheiben 11, 12 durch Druckmittelzufuhr über Leitung 10 auch alleine zur Anlage gebracht werden. Ist jedoch keine Druckmittelzufuhr über Leitung 10 gewährleistet, wie beispielsweise bei Motorstillstand, besitzt die Feder 23 ausreichende Vorspannung, um entgegen dem Widerstand von in dieser Fig. nicht gezeigten Rückstellfedern 29 des Kolbens 9 den Bremslüft-Ringkolben 25 samt seinem Radialkragen 24 und damit auch den Betriebsbrems-Ringkolben 9 gegen die Bremsscheiben 11 bzw. 12 mit solcher Kraft in Anlage zu bringen, daß sich das angetriebene System (Fahrzeug oder dgl.) nicht, z. B. bei Druckabfall, selbsttätig in Bewegung setzen kann. Durch an sich bekannte Wechselventile im Druckmittelsystem bzw. an der Bremstrittplatte wird sichergestellt, daß der Bremslüftdruck dem Bremsdruck der Betriebsbremse nie entgegensteht. Für die auf minimalem axialen Bauraum angestrebte Unterbringung der beiden Bremsbetätigungskolben 9 und 25 sowie der zugehörigen Federn 29 und 23 wurde der Zwischenring 26 bremsenseitig etwa radial bündig mit dem Radialkragen 24 ausgeführt und die Druckfedern 23 zusammen mit dem Bremskolben 25 in einem zwischen Bremsscheibenträger 15 und Hohlradträger 2 radial unterhalb des Betriebsbremsen-Ringkolbens 9 verbliebenen Freiraum unter weitgehend senkrecht zur Welle 14 erfolgender Ausrichtung des Hohlradträgers 2 besonders raumsparend ohne jede Erweiterung gegenüber Gehäusen 21 ohne Feststellbremsen 25, 26 untergebracht. Die Schraubbefestigungen 4 greifen dabei auf etwa gleichem Lochkreis wie die koaxialen Strecken der Druckleitungen 10, 28 in den bremsenseitigen Bund des Nabenträgers 1 ein und erfordern kein Außengewinde des getriebeseitigen Nabenbundes 3 oder am Nabenträger 1. Während in Fig. 1 der Bremsscheibenträger 15 einen gegenüber den Planeten 20 und deren Lagern offenen Ölfangring 30 aufweist, aus dem radiale Kanäle zu den Bremsscheiben 11, 12 führen, und der Steg des Bremsscheibenträgers 15 axiale Bohrungen benötigt, um eine günstige Ölzirkulation im Bremsbereich sicherzustellen, ist nach Fig. 2 der Ölfangring 30 von den Planeten 20 abgewandt und kann eine zwischen Hohlrad 13 und der Nabe des Bremsscheibenträgers 15 relativ dicht abschließende Bremsdruckplatte 17 vorgesehen werden, um den Schmiermittelvorrat der Planeten 20 bei rauhem Betrieb nicht durch evtl. verunreinigtes Schmiermittel aus dem Bereich der Bremsscheiben 11, 12 zu beeinträchtigen. Außerdem ist in Fig. 2 die Druckfeder 23 als eine Mehrzahl von am Umfang gleichmäßig verteilten Schraubenfedern angedeutet, wobei in am Umfang noch verbleibenden Zwischenräumen Platz bleiben kann, um dort, ohne jeden weiteren zusätzlichen Raumbedarf, am Betriebsbrems-Ringkolben 9 angreifende Rückhol-Schraubenfedern 29 (hier nicht gezeigt) ebenfalls unterzubringen. Damit können separate Rückholfedern ersetzende selbstspreizende Ausführungen der Bremsscheiben 11 bzw. 12 vermieden werden.

In Fig. 3 ist zur Vergleichserleichterung eine Ausgestaltung des Hohlradträgers 2 mit seinem von der Schraubenbefestigung 4 durchdrungenen inneren Nabenbund 3 in einer Ausführung ohne Feststellbremse 23, 25, 26, 27 dargestellt. Mittels einer eingestrichelten Kontur wird verdeutlicht, daß es erfindungsgemäß leicht möglich ist, abmessungsgleiche serienmäßige Rohteile für Hohlradträger 2 und Betriebsbrems-Ringkolben 9 im Bedarfsfalle zusätzlich auf einfache Weise auch so weiterzubearbeiten, daß sich auf Wunsch die Feststellbremsen-Teile ohne grundlegende Umkonstruktion der Bremsanordnung jederzeit auf einfachste Weise auch nachträglich hier einsetzen lassen. Damit ergeben sich durch Vereinfachung des innerbetrieblichen Materialdurchlaufes weitere beachtliche Rationalisierungs- und Lieferzeitvorteile.

Durch Verwendung eines bei Betätigung der Betriebsbremse entlüftenden Druckhalteventils und einem vorgeschalteten Druckspeicher kann mit der unabhängig geführten Bremslüftleitung eine besonders praxisgerechte und raumsparende Bremsbetätigungsmöglichkeit geschaffen werden.

Bei Anbau einer manuell bedienbaren Hilfspumpe an die zentrale Druckmittel-Versorgungsleitung kann die Feststellbremse auch dann gelüftet werden, wenn beispielsweise durch Motorausfall die zentrale motorische Druckmittelquelle nicht zur Verfügung steht, das Fahrzeug jedoch abgeschleppt werden muß.

Die vorstehend am Beispiel sogenannter Radkopfgetriebe dargestellten Lösungsmerkmale sind auch bei beliebigen anderen Bremsen, die wirkungsähnlich in Getriebegehäuse integriert sind, gleichermaßen vorteilhaft verwertbar.

Bezugszeichen

| | |
|---|---|
| 1 | Nabenträger |
| 2 | Hohlradträger |
| 3 | Nabenbund getriebeseitig innen |
| 4 | Schraubbefestigung |
| 5 | Nabenbund getriebeabgewandt |
| 6 | Innenverzahnung von 1 |
| 7 | Nabenbund getriebeseitig außen |
| 8 | Betriebsbrems-Ringzylinder |
| 9 | Betriebsbrems-Ringkolben |
| 10 | Betriebsbrems-Druckleitung |
| 11 | Äußere Bremsscheibe |
| 12 | Innere Bremsscheibe |
| 13 | Hohlrad |
| 14 | Schaftwelle |
| 15 | Bremsscheibenträger |
| 16 | Sicherungsring in 13 |
| 17 | Bremsdruckplatte |
| 18 | Gehäusedeckel |
| 19 | Planetenbolzen |
| 20 | Planetenräder |
| 21 | Getriebegehäuse |
| 22 | Lager für 21 |
| 23 | Druckfeder |
| 24 | Radialkragen |
| 25 | Bremslüft-Ringkolben |
| 26 | zwischenring |
| 27 | Bremslüft-Ringzylinder |
| 28 | Bremslüft-Druckleitung |
| 29 | Rückstellfedern |
| 30 | Ölfangring |
| 31 | Radialbohrungen in 15 |
| 32 | Horizontalbohrungen in 15 |
| 33 | Zwischendichtung 15/17 |
| 34 | Zwischendichtung 15/26 |

**Patentansprüche**

1. Fahrzeuggetriebe in Planetenbauweise
   - mit integrierter Betriebs- und Feststellbremse,
   - deren Innenbremsscheibe (12) von einer zentralen Schaftwelle (14) mitgenommen wird,
   - und deren Außenbremsscheiben (11) in einem Hohlrad (13) drehfest gehalten sind,
   - das über einen Hohlradträger (2) mit einem Nabenträger (1) verbunden ist,
   - wobei ein Betriebsbrems-Ringkolben (9) über Betriebsbrems-Druckleitungen (10) entgegen der Kraft von Rückstellfedern (29) in Richtung auf die Bremsscheiben (11, 12) mit Druck beaufschlagbar ist,

   - und wobei ringförmig angeordnete Druckfedern (23) gegen den Betriebsbrems-Ringkolben (9) einen Bremslüft-Ringkolben (25) drücken,
   - der in entgegengesetzter Richtung über Bremslüft-Druckleitungen (28), welche von den Betriebsbrems-Druckleitungen (10) getrennt geführt sind, unabhängig vom Betriebsbrems-Ringkolben (9) beaufschlagbar ist,
   dadurch **gekennzeichnet,**
   - daß der Betriebsbrems-Ringkolben (9) in einem Außenringbund des Hohlradträgers (2) als Stufenkolben eingesetzt ist und mit dem Außenringbund einen Betriebsbrems-Ringzylinder (8) bildet,
   - daß der Betriebslüft-Ringkolben (25) innerhalb der axialen Erstreckung des Betriebsbrems-Ringkolbens (9) liegt, sich mit einem Radialkragen (24) an diesem abstützt und mit diesem zum Hohlradträger (2) hin offene Kammern für die Druckfedern (23) bildet, die sich am Hohlradträger (2) abstützen und deren Federweg und Vorspannung größer sind als die Federwege und Vorspannungen der Rückstellfedern (29),
   - wobei der Bremslüft-Ringkolben (25) auf einem getriebeseitigen inneren Nabenbund (3) des Hohlradträgers (2) geführt ist und als Stufenkolben mit einem ebenfalls am inneren Nabenbund (3) zentrierten Zwischenring (26) einen Bremslüft-Ringzylinder (27) bildet, in welchen die Bremslüft-Druckleitungen (28) münden.

2. Getriebe nach Anspruch 1, dadurch **gekennzeichnet,** daß die Innenbremsscheiben (12) auf einem radförmigen Bremsscheibenträger (15) radial abgestützt sind, dessen Außendurchmesser etwa mit der Umlaufbahn der Mittelachsen von Planetenbolzen (19) des axial vorgeordneten Planetengetriebes (14, 19, 20, 13) übereinstimmt.

3. Getriebe nach Anspruch 2, dadurch **gekennzeichnet,** daß der Bremsscheibenträger (15) einen von seinem Steg hohlradträgerseitig über die Schraubbefestigung (4) vorkragenden Außenkranz mit radialen Öldurchlaßbohrungen (31) aufweist,

4. Getriebe nach Anspruch 3, dadurch **gekennzeichnet,** daß der Bremsscheibenträger (15) einen von seinem Steg planetenseitig vorkragenden Außenkranz und Horizontalbohrungen (32) im Steg aufweist.

5. Getriebe nach Anspruch 1, dadurch **gekennzeichnet,** daß die Druckfedern (23) als Tellerfedern und die Rückstellfedern als selbstspreizende Bremsscheiben (11) vorgesehen sind.

6. Getriebe nach Anspruch 1, dadurch **gekennzeichnet,** daß die Druckfedern (23) als einzelne, am Umfang gleichmäßig verteilt angeordnete Schraubenfedern und die Rückstellfedern als dazu am Umfang versetzt angeordnete Spiralzugfedern ausgeführt sind.

7. Getriebe nach Anspruch 1, dadurch **gekenn-**

zeichnet,

– daß die Rückstellfedern (29) als Blattfedern mit radialer Hauptrichtung ausgeführt sind,

– welche mit einem Ende durch die Schraubbefestigung (4) des Zwischenringes (26) bzw. des Hohlradträgers (2) am Nabenträger (1) gehalten und mit dem anderen Ende gegen einen Vorsprung am Betriebsbrems-Ringkolben (9) axial abgestützt sind,

– wobei der Betriebsbrems-Ringkolben (9) bei gestreckter Feder (29) gegenüber den Bremsscheiben (11, 12) außer Anlage gehalten ist.

8. Getriebe nach Anspruch 1, dadurch **gekennzeichnet**, daß die Bremslüft-Druckleitung (28) ein bei Betätigung des Betriebsbrems-Ringkolbens (9) öffnendes Druckhalteventil und einen Druckspeicher aufweist.

9. Getriebe nach Anspruch 1, dadurch **gekennzeichnet**, daß die Bremslüft-Druckleitung (28) bei Ausfall der zentralen Druckmittelquelle mit einer manuell bedienbaren Hilfspumpe beaufschlagbar ist.

10. Getriebe nach Anspruch 1, dadurch **gekennzeichnet**, daß im Druckmittelsystem Bremsbetätigungsmittel vorgesehen sind, die bei Aktivierung der Betriebsbrems-Druckleitungen (10) eine gleichzeitige Desaktivierung der Bremslüft-Druckleitung (28) sicherstellen.

## Claims

1. Planetary style vehicle gearing
– having an integrated service and parking brake,
– whose internal brake disk (12) is driven by a central shank shaft (14)
– and whose external brake disks (11) are held non-rotatably in a ring gear (13),
– which is connected by a ring gear carrier (2) to a hub carrier (1),
– with a service brake annular piston (9) being displaceable by means of pressure through service brake pressure lines (10) against the action of restoring springs (29) towards the brake disks (11, 12),
– and with annularly disposed pressure springs (23) pressing a brake-lifting annular piston (25) against the service brake annular piston (9),
– said brake-lifting annular piston being displaceable in the opposite direction by means of brake-lifting pressure lines (28), which run separately from the service brake pressure lines (10), independently of the service brake annular piston (9), **characterised** in that
– the service brake annular piston (9) is inserted as a differential piston in an external collar of the ring gear carrier (2) and forms with the external collar a service brake ring cylinder (8),
– that the brake-lifting annular piston (25) lies inside the axial extension of the service brake annular piston (9), is supported on the latter by a radial collar (24) and with it forms chambers, which are open towards the ring gear carrier (2), for the pressure springs (23) which are supported on the ring gear carrier (2) and whose spring excursion and initial tension are greater than the spring excursions and initial tensions of the restoring springs (29),
– with the brake-lifting annular piston (25) being guided on a gearing-side internal hub collar (3) of the ring gear carrier (2) and forming as a differential piston with an intermediate ring (26) likewise centred on the internal hub collar (3) a brake-lifting ring cylinder (27) into which the brake-lifting pressure lines (28) open.

2. Gearing according to claim 1, **characterised** in that the internal brake disks (12) are radially supported on a wheel-like brake disk carrier (15) whose external diameter approximately corresponds to the orbit of the centre lines of planetary pins (19) of the axially prearranged planetary gearing (14, 19, 20, 13).

3. Gearing according to claim 2, **characterised** in that the brake disk carrier (15) has, projecting from its land on the ring gear carrier side beyond the screw fastening (4), an external collar with radial oil penetration bores (31).

4. Gearing according to claim 3, **characterised** in that the brake disk carrier (15) has a external collar protruding from its land on the planetary side and has horizontal bores (32) in the land.

5. Gearing according to claim 1, **characterised** in that the pressure springs (23) are provided as cup springs and the restoring springs are provided as self-expanding brake disks (11).

6. Gearing according to claim 1, **characterised** in that the pressure springs (23) take the form of individual helical springs uniformly distributed over the periphery and the restoring springs take the form of spiral tension springs arranged over the periphery in an offset manner relative to the helical springs.

7. Gearing according to claim 1, **characterised** in that
– the restoring springs (29) take the form of mainly radially directed leaf springs,
– of which one end is secured by the screw fastening (4) of the intermediate ring (26) and the ring gear carrier (2) on the hub carrier (1) and the other end is axially supported against a projection on the service brake annular piston (9),
– with the service brake annular piston (9) being held, when the spring (29) is extended, out of contact with the brake disks (11, 12).

8. Gearing according to claim 1, **characterised** in that the brake-lifting pressure line (28) has a pressure keeping valve, which opens upon actuation of the service brake annular piston (9), and an accumulator.

9. Gearing according to claim 1, **characterised** in that, in the event that the central pressure medium source fails, the brake-lifting pressure line (28) may be acted upon by a manually operable auxiliary pump.

10. Gearing according to claim 1, **characterised** in that there are provided in the pressure medium system brake operating means which, upon activation of the service brake pressure lines (10), ensure simultaneous deactivation of the brake-lifting pressure line (28).

**Revendications**

1. Boîte de transmission planétaire pour véhicule,
– comportant un frein intégré de service et de stationnement
– dont des disques intérieurs de frein (12) sont entrânés par un arbre central (14)
– et dont des disques extérieurs de frein (11) sont maintenus fixes, au point de vue de la rotation, dans une couronne (13) à denture intérieure
– qui est raccordée à un porte-moyeu (1) par un porte-couronne (2),
– dans laquelle un piston annulaire (9) du frein de service peut être sollicité par une pression en direction des disques de frein (11, 12) au moyen de conduits de pression (10) du frein de service, à l'encontre de la poussée de ressorts de rappel (29),
– et dans laquelle des ressorts de poussée (23) à disposition annulaire poussent contre le piston annulaire (9) du frein de service un piston annulaire (25) de desserrage du frein,
– lequel peut être sollicité dans le sens opposé indépendamment du piston annulaire (9) du frein de service, au moyen de conduits de desserrage de frein (28) qui sont séparés des conduits de pression (10) du frein de service,
**caractérisée,**
– en ce que le piston annulaire (9) du frein de service est logé sous la forme d'un piston étagé dans un rebord extérieur annulaire du porte-couronne (2) et forme avec ce rebord un vérin annulaire (8) du frein de service,
– en ce que le piston annulaire de desserrage (25) se trouve à l'intérieur de la partie du piston annulaire (9) du frein de service, s'étendant axialement s'appuie par un collet radial (24) sur ce piston et forme avec lui des logements, ouverts en direction du porte-couronne (2), pour les ressorts de poussée (23) qui s'appuient contre le porte-couronne (2) et dont la course élastique et la précontrainte sont plus grandes que celles des ressorts de rappel (29),
– et où le piston annulaire de desserrage (25) est guidé sur un rebord intérieur de moyeu (3) prévu sur le porte-couronne (2) du côté de l'engrenage et est agencé en piston étagé formant, avec un anneau intermédiaire (26) également centré sur le rebord intérieur de moyeu (3), un vérin de desserrage de frein (27) dans lequel débouchent les conduits de desserrage (28).

2. Boîte de transmission selon la revendication 1, **caractérisée** en ce que les disques intérieurs de frein (12) sont appuyés radialement sur un porte-disques (15) en forme de roue, dont le diamètre extérieur est approximativement égal à celui de la trajectoire des axes de satellites (19) de l'engrenage planétaire (14, 19, 20, 13) se trouvant axialement devant lui.

3. Boîte de transmission selon la revendication 2, **caractérisée** en ce que le porte-disques (15) comporte une couronne extérieure formant un rebord proéminent par rapport à son flasque du côté du porte-couronne, par-dessus les vis de fixation (4), et pourvue d'orifices radiaux de passage d'huile (31).

4. Boîte de transmission selon la revendication 3, caractérisée en ce que le porte-disques (15) comporte une couronne extérieure formant un rebord proéminent par rapport à son flasque du côté de l'engrenage planétaire et comporte des trous horizontaux (32) dans son flasque.

5. Boîte de transmission selon la revendication 1, **caractérisée** en ce que les ressorts de poussée (23) sont prévus sous la forme de ressorts Belleville, et les ressorts de rappel sous la forme de disques de frein (11) s'écartant par eux mêmes.

6. Boîte de transmission selon la revendication 1, **caractérisée** en ce que les ressorts de poussée (23) sont constitués par plusieurs ressorts hélicoïdaux répartis uniformément sur la circonférence et en ce que les ressorts de rappel sont constitués par des ressorts hélicoïdaux de traction, décalés par rapport à ceux-ci sur la circonférence.

7. Boîte de transmission selon la revendication 1, **caractérisée**
– en ce que les ressorts de rappel (29) sont constitués par des lames-ressorts à direction générale radiale,
– lesquelles sont fixées à une extrémité sur le porte-moyeu (1) au moyen de la fixation à vis (4) de l'anneau intermédiaire (26) ou du porte-couronne (2) et sont appuyées axialement à leur autre extrémité contre un élément protubérant prévu sur le piston annulaire (9) du frein de service,
– de sorte que le piston annulaire (9) du frein de service est maintenu non appuyé contre les disques de frein (11, 12) quand les ressorts (29) sont droits.

8. Boîte de transmission selon la revendication 1, **caractérisée** en ce que le conduit de desserrage (28) comporte une soupape de retenue, s'ouvrant en cas d'actionnement du piston annulaire (9) du frein de service, et un accumulateur de pression.

9. Boîte de transmission selon la revendication 1, **caractérisée** en ce que le conduit de desserrage (28)

**EP 0 328 526 B1**

est agencé pour être alimenté par une pompe auxiliaire à commande manuelle quand la source centrale de fluide de pression n'est pas disponible.

10. Boîte de transmission selon la revendication 1, **caractérisée** en ce qu'il est prévu, dans le circuit de fluide de pression, des moyens de commande de frein qui, lorsque les conduits de pression (10) du frein de service sont actifs, rendent simultanément inactif le conduit de desserrage (28) du frein.

FIG.1

FIG.2

FIG.3